# EUROPEAN PATENT APPLICATION

(11) **EP 0 919 357 A2**
(43) Date of publication of application: **02.06.1999**
(21) Application number: 98830648.6
(22) Date of filing: 27.10.1998
(51) Int. Cl.: B29C 63/00

(54) **Rimming machine**

(30) Priority: 31.10.1997 IT BO970653
(71) Applicant: SCM GROUP AUTEC DIVISION S.p.A., 47040 Villa Verucchio (Rimini) (IT)
(72) Inventor: Maioli, Fabio, 47822 Santarcangelo Di Romagna (Rimini) (IT); Rosati, Massimo, 61100 Pesaro (IT); Neri, Alessandro, 47811 Viserba (Rimini) (IT); Trebbi, Enrico, 61100 Pesaro (IT)
(74) Representative: Lanzoni, Luciano

(57) **Abstract**

A machine for rimming panels (1) comprises at least one plane (3) for supporting the panel (1) able to slide along a transverse axis (Y) of travel, in the two directions and according to a rectilinear line; a bridge structure (8) presenting a beam (9) developing along the longitudinal axis (X) of the machine (2), above and across the support plane (3), and supporting means (4) for applying a rim strip (5) on the short sides (6) of the panel (1) and means (7) for working the strip itself combined to and movable with means (30) for working the short sides (6) of the panel (1); such means (4, 7 - 30) are able to slide, in the two directions and by means of related first guides (10), along the same beam, i.e. along the axis (X) with respect to the support plane (3); lastly, there are control means (11) acting on the support plane (3) and on the means (30, 4, 7) for working the short sides (6), for applying and working the strip (5) in such a way as to allow, in succession, the machining of the border of the panel, the application of the rim strip (5) and the finishing of the strip itself as a result of movements controlled on the two axes (X, Y) according to the contour presented by the panel (1).

## Description

The present invention relates to a rimming machine, in particular for applying a strip of material (generally synthetic) to borders of panels.

The aforesaid pieces of wood, whether solid or in its derivatives, for instance compacted wooden chips, or even of plastic material, are widely utilised for the realisation of panels for desktops, furniture, shelves, and can present different sizes and different perimeter configurations depending on the demands of the market or on the specific use whereto the panel is destined.

Current methodologies for the application of the aforementioned border strip entail, in a first solution, a continuous advance of the panel along a line of successive stations wherein the strip which defines the rim is applied by hot gluing and possibly trimmed and finished.

This methodology is used when a high number of panels presents a rectilinear border development (i.e. panels with quadrangular shape) and through machines of the type known as "transfert" or on machines where the panel is made to move continuously along a rectilinear direction and through a succession of stations that allow the application of the strip and its trimming or finishing, which may be repeated in multiple passages according to the narrow sides of the panel to be obtained.

If, instead, the panel presents a border with irregular, or not completely rectilinear profile, or with recesses and rounded corners (such as panels whose profile is circular, ellipsoidal, etcetera) where it is also necessary to apply a continuous strip (covering the entire perimeter of the panel), there is a need to operate on machines designed differently from those mentioned above (and of particular interest for this description). In order to realise this, solutions are known in the prior art with machines, as can be seen in patent EP - 276.358, which provide for a fixed station where the panel is locked in place, whilst a carriage, fitted with an arm for supporting feeding devices, applying the rim coverage strip and working on the rim, moves according to two controlled axes, the X and Y axes, and above and parallel to the plane of the panel to apply the strip along the border of the panel itself.

A second known solution can be seen in patent WO 97/05993, where the panel is picked up outside the machine and positioned (inside the machine itself) on a work plane able to rotate around its own vertical axis (Z); in proximity to the peripheral edge of the work plane are positioned operating stations (for milling, applying the rim, trimming, etc.). These stations are reached, on each occasion, and by means of a translation along the X axis of the machine, by the work plane thereby placing the border of the panel in contact with the involved station, then initiating the rotation and allowing the working units to follow the profile of the panel and work thereon.

Such solutions however present some drawbacks: the first solution has low productivity in the unit of time and is relatively expensive, since the arm for supporting the working sets and devices must necessarily effect, in succession, multiple closely spaced operations, thereby making the overall process extremely slow; the second solution mentioned needs an extremely large load-bearing structure, and the operating stations must be managed by automatic systems with extremely complex microprocessor based control systems, since the work points are positioned on polar instead of Cartesian coordinates. In addition it should be considered that the movements necessary for the plane to bring the panel in proximity to the work stations determines an extremely slow and not always precise operating cycle.

The object of the present invention therefore is to eliminate the drawbacks mentioned above through the realisation of a rimming machine with high precision and quality in the working processes on the rim and in the application of the covering strip coupled with high speed of execution.

The technical features of the invention, according to the aforesaid aims, can clearly be seen from the content of the claims reported below and its advantages will become more readily apparent from the detailed description that follows, made with reference to the accompanying drawings, which represent an embodiment provided purely by way of non-limiting example, wherein:
- Figure 1 shows a rimming machine according to the present invention in a schematic top plan view with some parts removed the better to highlight others;
- Figure 2 shows the machine referred to Figure 1 in a schematic front view from A with respect to Figure 1;
- Figure 3 shows a detail of the machine as per Figure 2 in a view from B;
- Figures 4 through 9 show a series of phases of application and machining of a rim strip on a single panel obtainable with the machine as per the previous Figures, with all figures being schematic top plan views;
- Figures 10 and 11 show corresponding simultaneous working phases of two panels, i.e. a parallel execution of the work processes, with the machine as per Figures 1 and 2 in a schematic plan view.

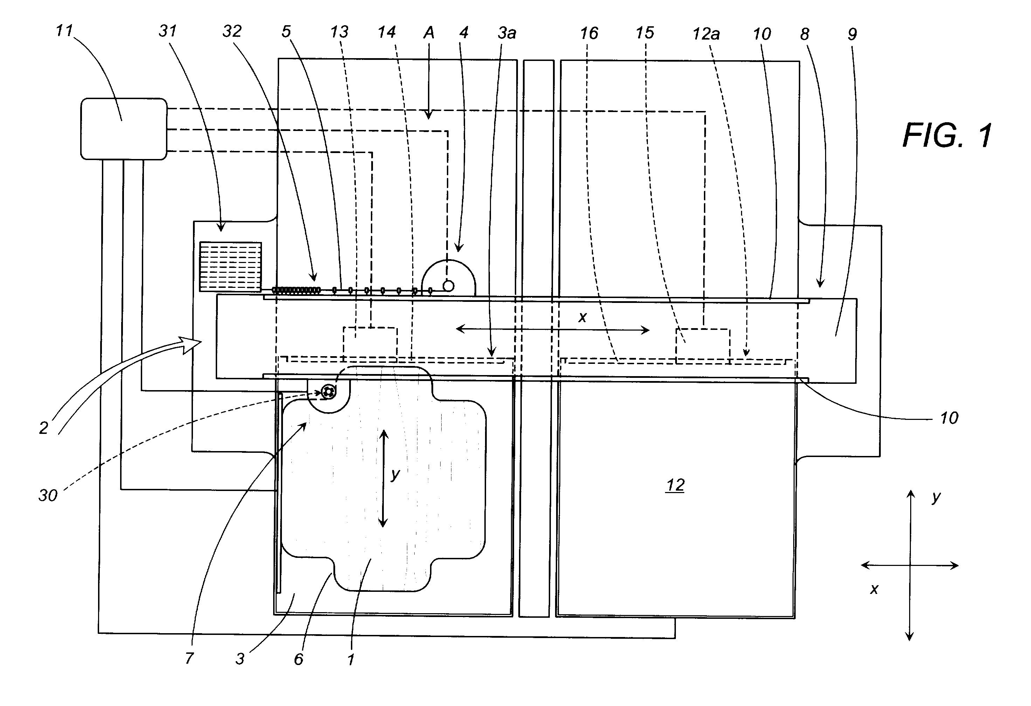

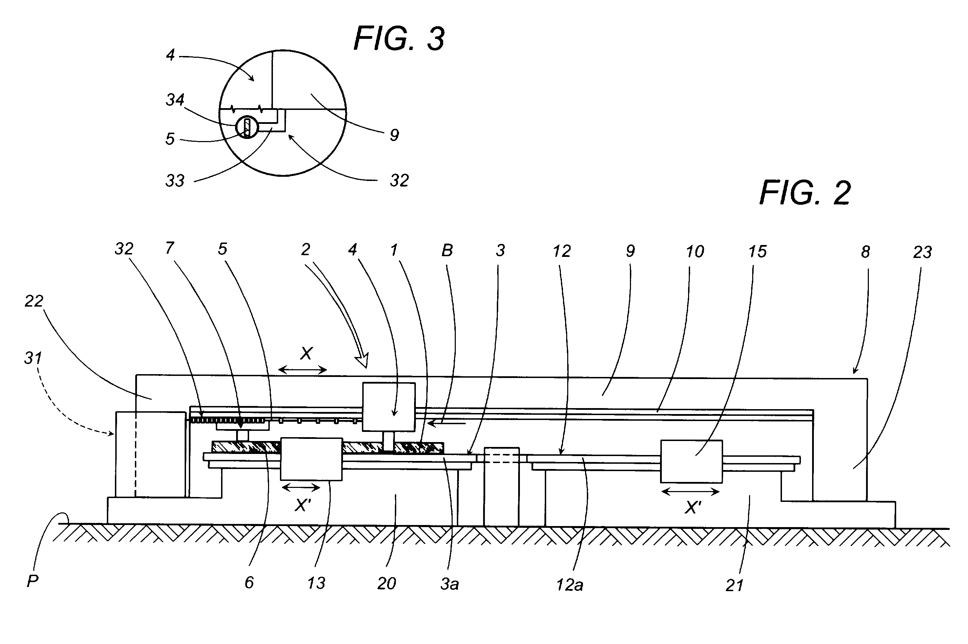

In accordance with the figures of the accompanying drawings, and with particular reference to Figures 1 and 2, the subject rimming machine is used to apply a rim strip 5 to the narrow sides or borders 6 of pieces of wood, plastic or similar materials, with panel configuration 1 and destined to form, individually or in conjunction with other panels, furnishing units.

In particular, this machine is preferentially usable to apply rim strips on panels presenting profiles that are not completely rectilinear, i.e. with round corners, or with recesses, or yet again on panels with circular, ellipsoidal, trapezoidal configuration, etc. This rimming machine comprises, in a simplified form (not shown here), a single plane 3 for supporting a panel 1 and means 4 for applying a rim strip 5, by means of hot gluing, onto the borders 6 of the panel 1 and means 7 for working (i.e. for trimming) the strip 5 applied to cover the borders themselves. To the means 7 for working the strip 5 can be further combined means 30 for working the panel border 6: in practice such means 30 realise a milling head (i.e. for the routing - contouring work process) of the border 6 and are shown in dashed line form in the block defining the unit of the means 7 for working the strip 5 (in terms of construction and by way of example they may be two different tools interchangeable within the same working unit through a known tool magazine).

Such means 4 for applying the strip 5 and the combination between the means 30 and 7 for milling the border 6 and trimming the strip 5 are shown with two simple blocks defining the working units (as they shall be defined hereinafter), since they are known in the art and are not strictly part of the subject invention.

Figures 1 and 2 show a preferred embodiment of the machine, wherein there are two support planes, indicated as 3 and 12, and mutually parallel so as to support horizontally a respective panel 1 and 1' to be worked on.

Such two support planes 3 and 12 and the working units 4, 7 and 30 can be set in relative motion with respect to each other according to a first and a second axis X and Y, mutually perpendicular. Such axes essentially coincide with the longitudinal (X) and the transverse (Y) axis of the machine (see Figure 1).

More specifically, the planes 3 and 12 for supporting respective panels 1 and 1' are able to slide along one of the axes of travel (in the case shown the aforesaid transverse axis Y), in the two directions and according to a rectilinear line. In practice, such planes 3 and 12 can, in the case shown and purely by way of example, be positioned on related fixed structures 20, 21, bearing down on a base plane P, and fitted with guides (not shown here) to allow the planes 3 and 12 to slide along the Y direction. Obviously the fixed structures 20 and 21 may, for the sake of greater simplicity of construction, be realised in a single body (as shown in dashed line form in Figure 2).

The number 8 indicates, in the Figures 1 and 2, a bridge structure presenting a beam 9 that develops along the other axis of travel (i.e. the longitudinal X axis), and above the support planes 3 and 12. Such beam 9, bearing down on two vertical pillars 22 and 23 integral with the base plane P, supports the aforesaid units 4 and 7 - 30 combined, which are able to slide, in the two directions and by means of related first guides 10, along the same beam, i.e. along the X axis with respect to the support planes 3 and 12.

The aforesaid units 4 and 7 - 30 are movable along the beam 9 independently of each other, thereby being able to operate, if necessary, simultaneously on distinct panels 1 and 1' positioned on the two support planes 3 and 12 (as shall be made more readily apparent below).

The simultaneous operation of the two units 4 and 7 - 30 is possible thanks to the placement of the units themselves in opposite areas of the beam 9 in order to allow rectilinear motion without interference between the two units 4 and 7 - 30.

In addition to these working units 4 and 7 - 30 a unit 13 and 15 is preferentially provided for joining the related loose ends 5a of the corresponding strips 5, applied to the borders 6 of the panels 1 and 1'; each joining unit 13, 15 is associated to a related support plane 3, 12.

More in detail, each joining unit 13 and 15 is connected to corresponding head edge 3a, 12a of the related support plane 3, 12; each unit 13, 15 is able to slide along the aforesaid edge 3a, 12a and along an axis X' parallel to the aforesaid longitudinal axis X of the machine 2, by means of related second guides 14 and 16, thereby positioning itself in an area of the same plane according to the pre-settable operating point where the loose ends 5a of the applied strip 5 are to be joined.

The motions of the units 4, 7 - 30, 13, 15 described heretofore and of the support plane 3 and 12 are obtained by means of controlled axes slaved to control means 11 (for instance a microprocessor or CNC numeric control unit), thereby allowing, in succession: the milling down to measure of the border 6 of the related panel 1 - 1' (means 30), the application of the rim strip 5 (means 4), the joining of the strip (unit 13 or 15) and the finishing thereof (means 7) on the panel I following motions controlled on the two axes X and Y according to the contour presented by panel(s) 1.

Observing Figures 1 and 2 again, the number 31 indicates a unit for storing strips 5 (of various width sizes depending on the thickness of the panel 1 to be covered or varying in material or colour), which unit 31 is positioned in proximity to the beam 9 in order to allow the means 4 for applying the strip 5 to draw the strip in question from the storage unit. In the case shown the storage unit 31 is preferentially positioned laterally to the support plane 3 to ease the approach to and the drawing of the strip 5 by the unit 4 which shall in such case be fitted with related pick up grip device (not shown here). Following the external structure of this storage unit 31, the horizontal beam 9 is provided with means 32 for suspending and guiding the strip 5 used during the travel along the X axis of the means 4 for applying the strip 5. Preferentially (see also Figure 3), such suspension means 32 shall comprise a plurality of horizontal shafts 33, mutually parallel, and fitted with a related ring 34, in correspondence with their ends, through which the strip 5 passes. Such shafts 33 shall be constrained to and able to slide, in the two directions, along the beam 9, and connected to the application means 4: in other words, the shafts 34 will follow, in the two directions, the motion of the unit 4 along the beam 9 to be able continuously to support the strip 5 unwound according to the position of the application unit 4 on the beam 9.

In practice, the machine heretofore described operates in the following manner, starting from a cycle start configuration and with a single panel 1 positioned on the support plane 3.

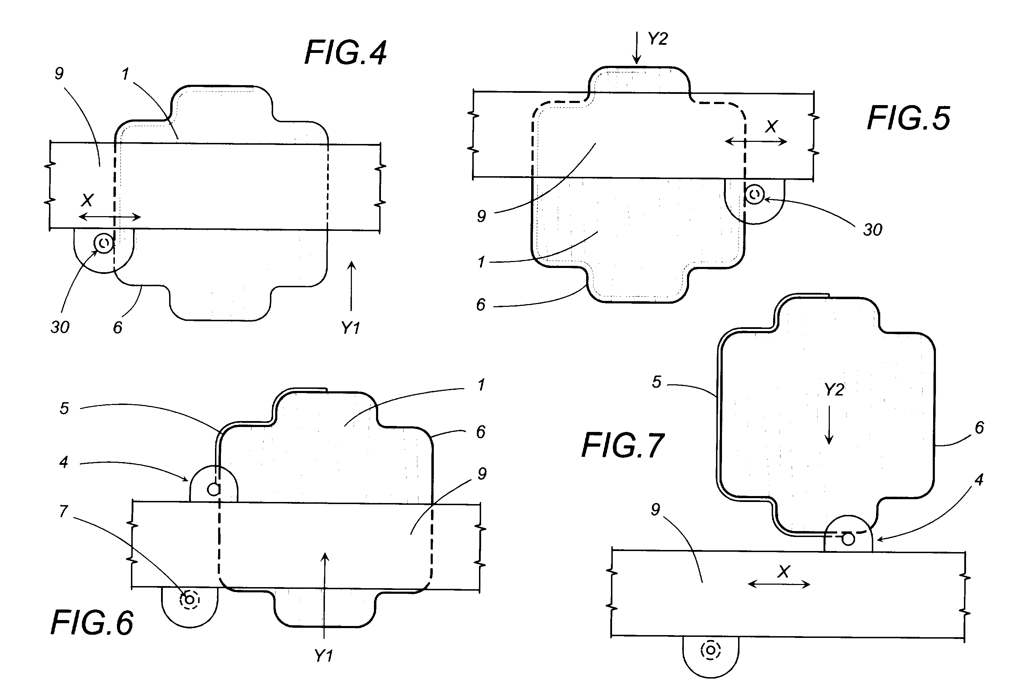

The support plane 3 with the panel 1 starts advancing according to the arrow Yl in Figure 4 to the point wherein, through the control of the means 11, it is intercepted by the unit 30 - 7 wherein the means 30 for milling or contouring the border 6 of the panel 1 are selected (also by the means 11) and active. Such means 30, through the numeric control, will follow the contour of the panel 1, moving on the X axis, and work on a portion of the border itself (see Figure 4) to the point wherein the panel 1 is almost completely beyond the beam 9, i.e. to the maximum distancing of the panel 1 away from the means 30. At this point, always maintaining contact between the border 6 and the means 30, the plane 3 inverts the direction of travel (see Figure 5 arrow Y2) and allows the remaining portion of the border 6 to be worked on.

Once this milling operation (defining a contouring or routing of the panel 1) is complete, the plane 3 starts further to travel in the direction Y1 to allow the means 4 to intercept the panel I and start the application of the strip 5 (already previously drawn from the storage unit 31) and following, as in the previous case, the contour of the advancing panel 1 (see Figure 6). Once the point of maximum distance of the panel 1 from the unit 4 (which should have executed at least half the contour of the panel itself) is reached, the motion of the plane 3 is inverted (see Figure 7) according to the direction Y2, thereby allowing the unit 4 to complete the application of the strip 5 to the entire border 6.

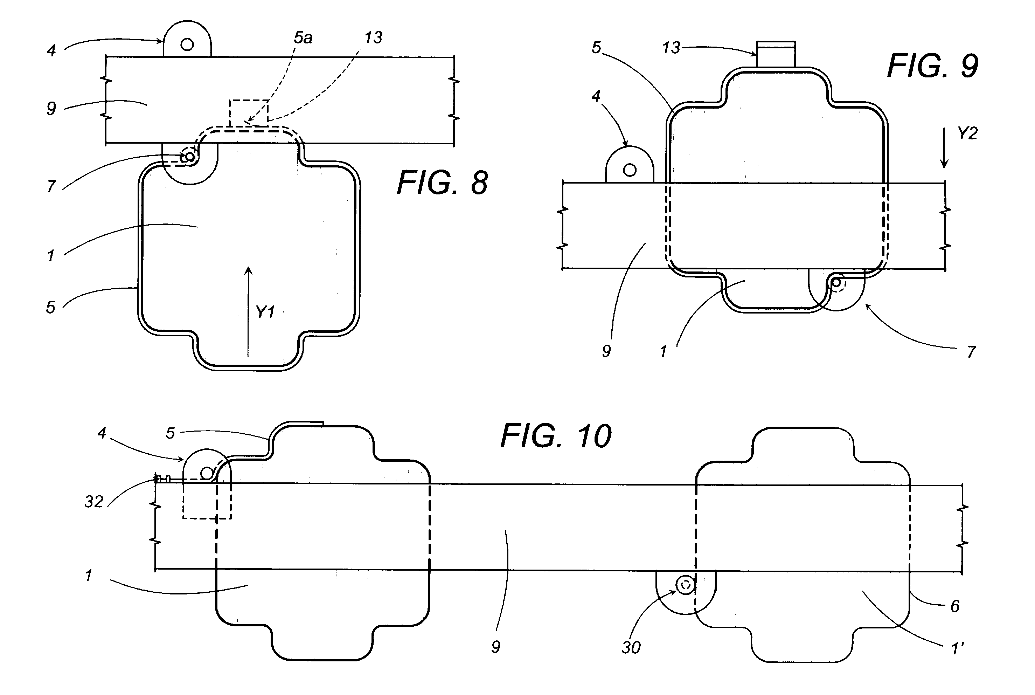

Thereupon, the plane 3 resumes its advance along the direction Yl (see Figure 8) to cause the panel 1 to be intercepted by the unit 7 - 30 where the control means 11 have selected and activated the means 7 for trimming the strip 5; the unit 7 thus finishes the strip 5 already applied through a second pass in the direction Y2 (see also Figure 9). As Figure 8 shows, as soon as the unit 4 ends the application of the strip 5 and no longer interferes on the panel 1, the joining unit 13 is activated to allow the correct connection of the ends 5a of the strip 5 before this portion of strip 5 is intercepted by the trimming unit 7 (obviously this operation is performed only in the case of rimming over 360°). Obviously, when the trimming process on the rim strip 5 of the panel 1 is complete, i.e. when the support plane 3 is in the cycle start area the panel 1 can be picked up from the plane 3 in order to start a new cycle.

Immediately after starting the working cycle of the panel 1 heretofore described, on the plane 12 to the side of the plane 3 can be positioned a panel 1' to be worked: in this way the moment the means 30 end milling on the panel 1, they are translated, upon command from the means 11, immediately above the plane 12 to be able to start milling the second panel 1' (which may also present a different contour from the previous one), whilst the unit 4 starts applying the strip 5 onto the panel 1 placed on the plane 3 (as Figure 10 shows) and already milled.

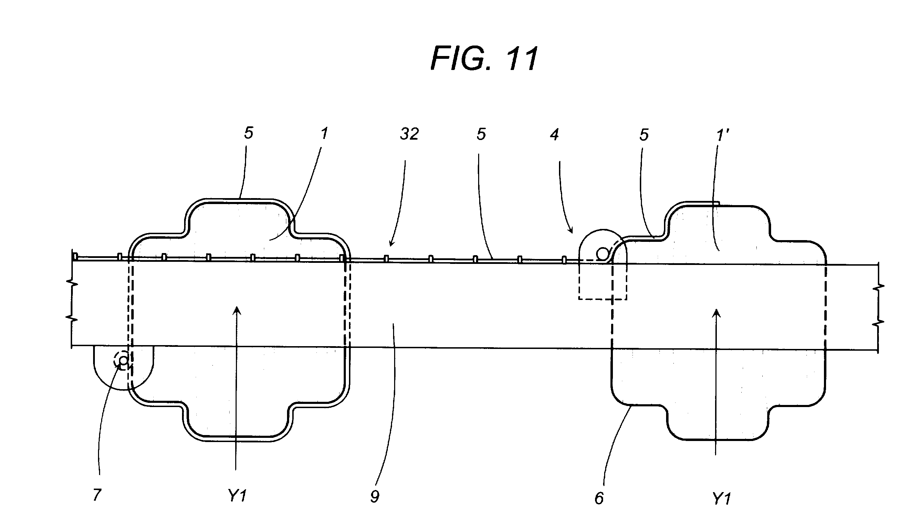

Once this type of cycle has started, the units 4 and 7 - 30 switch their operating positions the moment they end the work processes on the respective panels 1 and 1' (see Figure 11 wherein the unit 7 is shown operating on the panel 1 and the unit 4 is shown operating on the panel 1'): in this way the idle times of each unit, which would take place in case of work processes on a single panel, are used operatively, i.e. the milling - trimming and routing operations on the panels 1 and 1' are executed "in parallel".

A machine thus structured fully attains the set aims thanks to an extremely compact structure, with reduced working times, yet with final results that are excellent from the qualitative point of view. The design architecture allows the ulmost optimisation of the operation of each individual working unit, thereby allowing the elimination of idle times and enabling considerably to enhance overall operating efficiency.

The motion on two controlled axes X and Y, subdivided between plane and operating units, allows to simplify the programming system of the machine with regard to electronic storage of the contour of the panel to be worked, as well as to enable the simultaneous machining of two panels presenting two different contours.

The invention thus conceived can be subject to numerous modifications and variations, without thereby departing from the scope of the inventive concept. Moreover, all components can be replaced with technically equivalent elements.

## Claims

1. Machine for rimming panels (I) made of wood, plastic materials and the like, machine (2) comprising at least a plane (3) for supporting said panel (1) and at least means (4) for applying a rim strip (5), by means of gluing, on the narrow sides or borders (6) of said panel (1) and means (7) for working said strip (5) applied to cover said borders (6); said at least one support plane (3) and said at least means (4) for applying and means (7) for working said strip (6) being capable of mutual relative motion according to a first and a second axis (X, Y), mutually perpendicular, characterised in that it comprises:
- said at least one plane (3) supporting said panel (1) able to slide along one said axis (Y) of travel, in the two directions and according to a rectilinear line;
- a bridge structure (8) presenting a beam (9) developing towards the other said axis (X) of travel, above and across said support plane (3), and supporting at least said means (4) for applying said strip (5) and said means (7) for working on the same strip able to slide, in the two directions and by means of related first guides (10), along the same beam, i.e. along said other axis (X) with respect to said support plane (3);
- control means (11) acting on said at least one support plane (3) and on said means (4) for applying and said means (7) for working in such a way as to allow, in succession, the application of said rim strip (5) and the finishing of the strip itself on said panel (1) as a result of motions controlled on the two said axes (X, Y) as a function of the contour presented by said panel (1).

2. Rimming machine according to claim 1, characterised in that it comprises means (30) for working said border (6) of the panel (1), associated to said beam (9), movable along said axis (X) of travel of said means (4, 7) for applying and working said strip (5) and slaved to said control means (11).

3. Rimming machine according to claim 1, characterised in that it comprises means (30) for working said border (6) of the panel (1) associated to said beam (9) and movable along said axis (X) of travel of said means (4, 7) for applying and working said strip (5); said means (30) for working said border (6) being combined to and movable with said means for working said strip (5) and slaved to said control means (11) in such a way as to allow the machining of the same border of the panel (1) prior to the application of said strip (5) and to its machining.

4. Rimming machine according to claim 3, characterised in that said means (30) for working said border (6) of said panel (1) perform a milling of the border itself.

5. Rimming machine according to claim 1, characterised in that it comprises at least two independent support planes (3, 12), positioned mutually parallel and below said beam (9) and able to allow a working process on respective said panels (1, 1') positioned on said planes (3, 12) by at least said means (4) for applying and said means (7) for working said rim strip (5).

6. Rimming machine according to claim 1, characterised in that at least said means (4) for applying and said means (7) for working said border strip (5) are movable along said beam (9) and according to said axis (X) in mutually independent fashion.

7. Rimming machine according to claim 5, characterised in that said at least means (4) for applying and said means (7) for working said border strip (5) are movable along said beam (9) and according to said axis (X) in mutually independent fashion thereby being able to operate simultaneously on related panels (1, 1') positioned on said two support planes (3, 12), i.e. placing in parallel the related operations of applying and respectively working said strip (5).

8. Rimming machine according to claim 1, characterised in that said at least means (4) for applying and means (7) for working said rim strip (5) are positioned on opposite areas of said beam (9).

9. Rimming machine according to claim 1, characterised in that on said at least one support plane (3) is associated a unit (13) for joining the loose ends of said strip (5) on said border (6) of the panel (1) and slaved to said control means (11).

10. Rimming machine according to claim 9, characterised in that said unit (13) for joining the loose ends of said strip (5) is connected to a head edge (3a) of said at least one support plane (3), able to slide along the head itself and parallel to a longitudinal axis (X) of said machine (2), by means of a second guide (14), thereby positioning itself in an area of the same plane as a function of the pre-settable operating point wherein the ends of said strip (5) are to be joined.

11. Rimming machine according to claim 5, characterised in that on said pair of support planes (3, 12) are associated respective units (13, 15) for joining related loose ends of said strips (5) on said borders (6) of the respective panels (1, 1') and slaved to said control means (11).

12. Rimming machine according to claim 11, characterised in that each said unit (13, 15) for joining the loose ends (5a) of said strip (5) is connected to a corresponding head edge (3a, 12a) of each said support plane (3, 13), able to slide along the same edge and parallel to a longitudinal axis (X') of said machine (2), by means of related second guides (14, 16) thereby positioning itself in an area of the same plane as a function of the pre-settable operating point wherein the loose ends (5a) of said strip (5) are to be joined.

13. Rimming machine according to claim 1, characterised in that it comprises a unit (31) for storing said strips (5) positioned in proximity to said beam (9) and able to allow said means (4) for applying said strip (5) to pick up the strip itself.

14. Rimming machine according to claims 1 and 13, characterised in that said horizontal beam (9) is provided with means (32) for suspending said strip (5) in correspondence with the travel along said axis (X) of said means (4) for applying said strip (5).

15. Rimming machine according to claim 14, characterised in that said suspension means (32) comprise a plurality of shafts (33) fitted with a related ring (34), in correspondence with one of their ends, through which said strip (5) passes; said plurality of shafts (33) being constrained to and able to slide, in the two directions, along said beam (9) and connected to said application means (4) thereby allowing a suspension of said strip (5) according to the position of said means (4) for applying the strip (5) on said beam (9).
